# EUROPEAN PATENT APPLICATION

(11) **EP 4 606 834 A1**
(43) Date of publication of application: **27.08.2025**
(21) Application number: 24872679.6
(22) Date of filing: 16.07.2024
(51) Int. Cl.: C08G 18/42, C08G 18/73, C08G 18/38, C08G 63/06

(54) **3-HYDROXYPROPIONATE (CO)POLYMER COMPOSITION, POLY(LACTIC ACID-B-3-HYDROXYPROPIONIC ACID) BLOCK COPOLYMER COMPOSITION, METHOD FOR PREPARING 3-HYDROXYPROPIONATE (CO)POLYMER, AND METHOD FOR PREPARING POLY(LACTIC ACID-B-3-HYDROXYPROPIONIC ACID) BLOCK COPOLYMER**

(30) Priority: 27.09.2023 KR 20230130580; 15.07.2024 KR 20240093171
(71) Applicant: LG CHEM, LTD., Seoul 07336 (KR)
(72) Inventor: KIM, Yulliana, Daejeon 34122 (KR); LEE, Cheolhee, Daejeon 34122 (KR); CHOE, Dongcheol, Daejeon 34122 (KR); CHOI, Jong Young, Daejeon 34122 (KR); KIM, Chul Woong, Daejeon 34122 (KR); HA, Myeongjin, Daejeon 34122 (KR); CHOI, Ji Hwan, Daejeon 34122 (KR); KIM, Woojung, Daejeon 34122 (KR); KOO, Kyosung, Daejeon 34122 (KR)
(74) Representative: Hoffmann Eitle
(86) International application number: PCT/KR2024/010136
(87) International publication number: WO 2025/070968

(57) **Abstract**

There are provided a 3-hydroxypropionate (co)polymer composition comprising a 3-hydroxypropionate (co)polymer and an isocyanate compound, a poly(lactide-b-3-hydroxypropionic acid) block copolymer composition comprising a poly(lactide-b-3-hydroxypropionic acid) block copolymer and an isocyanate compound, and methods for producing the 3-hydroxypropionate (co)polymer and the poly(lactide-b-3-hydroxypropionic acid) block copolymer.

## Description

### [TECHNICAL FIELD]

There is provided a 3-hydroxypropionate (co)polymer composition, a poly(lactic acid-b-3-hydroxypropionic acid) block copolymer composition, a method for producing a 3-hydroxypropionate (co)polymer, and a method for producing a poly(lactic acid-b-3-hydroxypropionic acid) block copolymer.

### [BACKGROUND]

Poly(3-hydroxypropionic acid) possesses biodegradable properties, and due to these environmentally friendly characteristics, research utilizing it has been actively conducted recently. There are two main methods for producing poly(3-hydroxypropionic acid): one involves using β-propiolactone (PL) based on petrochemicals, and the other uses bio-based 3-hydroxypropionic acid (3HP).

When using β-propiolactone, multiple synthesis steps are required using ethylene oxide, which presents economic disadvantages compared to using 3-hydroxypropionic acid and results in a bio-content of 0%.

On the other hand, in the case of polymerization using the synthesis of 3-hydroxypropionic acid, several steps are required to obtain poly(3-hydroxypropionic acid), including freeze-drying, ultra-sonication, and solvent extraction, necessitating the use of large amounts of solvent. Attempts have been made to polymerize 3-hydroxypropionic acid using condensation polymerization to solve this problem, but there are limitations in obtaining high molecular weight poly(3-hydroxypropionic acid) due to by-products in the form of cyclic oligomers. Efforts to increase molecular weight by Ring-Opening Polymerization (ROP) of low molecular weight cyclic oligomers face challenges in separation and purification. Thus, there is a need for a method to produce high molecular weight poly(3-hydroxypropionic acid) from 3-hydroxypropionic acid.

Additionally, polylactic acid (PLA) is a plant-derived resin obtained from plants such as corn, and it is gaining attention as an environmentally friendly material with excellent tensile strength and elasticity, along with its biodegradable properties. However, compared to conventional petroleum-based resins, it has limitations in impact resistance and heat resistance, restricting its range of applications. Furthermore, its elongation to break characteristics are poor, showing brittleness, which limits its use as a general-purpose resin.

To improve these shortcomings, research on copolymers containing other repeating units in polylactic acid is being conducted, with particular attention on 3-hydroxypropionic acid as a comonomer to improve elongation. In particular, poly(lactic acid-b-3-hydroxypropionic acid) block copolymers are attracting attention, as they maintain the inherent properties of polylactic acid while improving elongation characteristics.

However, biodegradable materials generally need to have a certain level of high molecular weight to possess inherent mechanical properties, necessitating the production of high molecular weight poly(lactic acid-b-3-hydroxypropionic acid) copolymers. During the polycondensation process of 3-hydroxypropionic acid, low molecular weight cyclic structures are formed, making it impossible to produce high molecular weight poly(3-hydroxypropionic acid) and reducing the yield of poly(3-hydroxypropionic acid). Thus, there is a demand for a method to produce poly(lactic acid-b-3-hydroxypropionic acid) copolymers with high molecular weight and excellent mechanical properties.

### [DETAILED DESCRIPTION OF THE INVENTION]

### [TECHNICAL PROBLEM]

The present invention provides a 3-hydroxypropionate (co)polymer composition and a poly(lactate-b-3-hydroxypropionic acid) block copolymer composition, each having a high molecular weight and exhibiting excellent tensile strength, modulus of elasticity, and elongation. The present invention also provides a method for producing each of 3-hydroxypropionate (co)polymers and poly(lactate-b-3-hydroxypropionic acid) block copolymers.

### [Technical Solution]

According to one embodiment of the present invention, a 3-hydroxypropionate (co)polymer composition comprising a 3-hydroxypropionate (co)polymer and an isocyanate compound is provided.

According to another embodiment of the present invention, a poly(lactic acid-b-3-hydroxypropionic acid) block copolymer composition comprising a poly(lactic acid-b-3-hydroxypropionic acid) block copolymer and an isocyanate compound is provided.

According to yet another embodiment of the present invention, a method for producing a 3-hydroxypropionate (co)polymer is provided, comprising producing a 3-hydroxypropionate (co)polymer by (co)polymerizing 3-hydroxypropionic acid in a reactor; and introducing an isocyanate compound into the reactor to react with the 3-hydroxypropionate (co)polymer.

According to yet another embodiment of the present invention, a method for producing a poly(lactic acid-b-3-hydroxypropionic acid) block copolymer is provided, comprising producing a 3-hydroxypropionate (co)polymer by (co)polymerizing 3-hydroxypropionic acid in a reactor; introducing an isocyanate compound into the reactor to react with the 3-hydroxypropionate (co)polymer; and producing a poly(lactic acid-b-3-hydroxypropionic acid) block copolymer by ring-opening polymerizing a lactide monomer with the 3-hydroxypropionate (co)polymer.

Hereinafter, the 3-hydroxypropionate (co)polymer composition, poly(lactic acid-b-3-hydroxypropionic acid) block copolymer composition, the method for producing 3-hydroxypropionate (co)polymer, and the method for producing poly(lactic acid-b-3-hydroxypropionic acid) block copolymer according to specific embodiments of the invention will be described in more detail.

**In** addition, unless specified otherwise or in cases with special circumstances, the steps constituting the manufacturing method described in this specification are not interpreted as being limited to the order described in the specification. Therefore, the order of the steps constituting the manufacturing method may be changed within the range easily understood by those skilled in the art, and any obvious changes accompanying this are included within the scope of the present invention.

Furthermore, in this specification, the terms first, second, etc., are used to describe various components, and these terms are used solely for the purpose of distinguishing one component from another.

Further, in this specification, the term (co)polymer encompasses both copolymers and homopolymers.

Further, unless otherwise specified, the weight average molecular weight of polymers, copolymers, etc., may be measured using a gel permeation chromatography (GPC). Specifically, the (co)polymer is dissolved in chloroform to a concentration of 2 mg/ml, and 20 µl is injected into the GPC, and GPC analysis is carried out at 40°C. At this time, chloroform is used as the mobile phase for GPC, the flow rate is 1.0 mL/min, and the column used is two Agilent Mixed-B units connected in series. RI Detector is used as a detector. The values of Mw can be obtained using a calibration curve formed using a polystyrene standard sample. Nine kinds of the polystyrene standard samples are used with the weight average molecular weight of 2,000 g/mol, 10,000 g/mol, 30,000 g/mol, 70,000 g/mol, 200,000 g/mol, 700,000 g/mol, 2,000,000 g/mol, 4,000,000 g/mol, and 10,000,000 g/mol.

Further, in this specification, the term "substituted or unsubstituted" means being unsubstituted or substituted with one or more substituent groups selected from the group consisting of deuterium; a halogen group; a nitrile group; a nitro group; a hydroxy group; a carbonyl group; an ester group; an imide group; an amino group; a phosphine oxide group; a alkoxy group; an aryloxy group; an alkylthioxy group; an arylthioxy group; an alkylsulfoxy group; an arylsulfoxy group; a silyl group; a boron group; an alkyl group; a cycloalkyl group; an alkenyl group; an aryl group; an aralkyl group; an aralkenyl group; an alkylaryl group; an alkylamine group; an aralkylamine group; a heteroarylamine group; an arylamine group; an arylphosphine group; and a heterocyclic group containing at least one of N**,** O and S atoms, or being unsubstituted or substituted with a substituent group in which two or more substituent groups of the above-exemplified substituent groups are linked. For example, "a substituent group in which two or more substituents are linked" may be a biphenylyl group. Namely, a biphenylyl group may be an aryl group, or it may be interpreted as a substituent group in which two phenyl groups are linked.

In this specification, the carbon number of a carbonyl group is not particularly limited, but is preferably 1 to 40. Specifically, the carbonyl group may be a compound having the following structural formulas, but is not limited thereto.

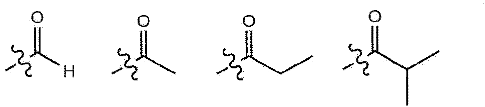

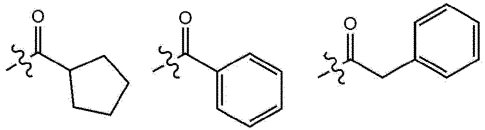

In this specification, an ester group may have a structure in which oxygen of the ester group may be substituted by a straight-chain, branched-chain, or cyclic alkyl group having 1 to 25 carbon atoms, or an aryl group having 6 to 25 carbon atoms. Specifically, the ester group may be a compound having the following structural formulas, but is not limited thereto.

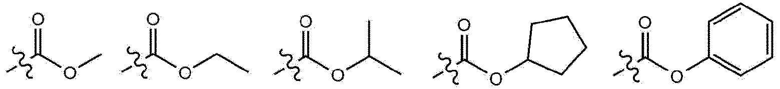

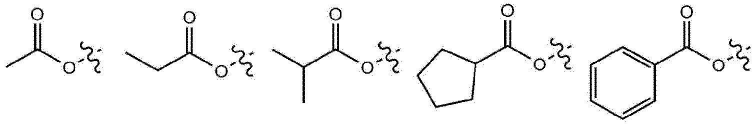

In this specification, the carbon number of an imide group is not particularly limited, but is preferably 1 to 25. Specifically, the imide group may be a compound having the following structural formulas, but is not limited thereto.

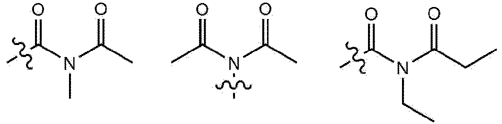

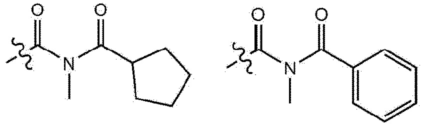

**In** this specification, a silyl group specifically includes a trimethylsilyl group, a triethylsilyl group, a t-butyldimethylsilyl group, a vinyldimethylsilyl group, a propyldimethylsilyl group, a triphenylsilyl group, a diphenylsilyl group, a phenylsilyl group and the like, but are not limited thereto.

**In** this specification, a boron group specifically includes a trimethylboron group, a triethylboron group, a t-butyldimethylboron group, a triphenylboron group, and a phenylboron group, but is not limited thereto.

**In** this specification, examples of halogen groups include fluorine, chlorine, bromine, or iodine.

**In** this specification, the alkyl group may be straight-chain or branched-chain, and the carbon number thereof is not particularly limited, but is preferably 1 to 40. According to one embodiment, the carbon number of the alkyl group is 1 to 20. According to another embodiment, the carbon number of the alkyl group is 1 to 10. According to another embodiment, the carbon number of the alkyl group is 1 to 6. Specific examples of the alkyl group include methyl, ethyl, propyl, n-propyl, isopropyl, butyl, n-butyl, isobutyl, tert-butyl, sec-butyl, 1-methyl-butyl, 1-ethyl-butyl, pentyl, n-pentyl, isopentyl, neopentyl, tert-pentyl, hexyl, n-hexyl, 1-methylpentyl, 2-methylpentyl, 4-methyl-2-pentyl, 3,3-dimethylbutyl, 2-ethylbutyl, heptyl, n-heptyl, 1-methylhexyl, cyclopentylmethyl, cyclohexylmethyl, octyl, n-octyl, tert-octyl, 1-methylheptyl, 2-ethylhexyl, 2-propylpentyl, n-nonyl, 2,2-dimethylheptyl, 1-ethyl-propyl, 1,1-dimethylpropyl, isohexyl, 4-methylhexyl, 5-methylhexyl, and the like, but are not limited thereto.

In this specification, the alkenyl group may be straight-chain or branched-chain, and the carbon number thereof is not particularly limited, but is preferably 2 to 40. According to one embodiment, the carbon number of the alkenyl group is 2 to 20. According to another embodiment, the carbon number of the alkenyl group is 2 to 10. According to still another embodiment, the carbon number of the alkenyl group is 2 to 6. Specific examples thereof include vinyl, 1-propenyl, isopropenyl, 1-butenyl, 2-butenyl, 3-butenyl, 1-pentenyl, 2-pentenyl, 3-pentenyl, 3-methyl-1-butenyl, 1,3-butadienyl, allyl, 1-phenylvinyl-1-yl, 2-phenylvinyl-1-yl, 2,2-diphenylvinyl-1-yl, 2-phenyl-2-(naphthyl-1-yl)vinyl-1-yl, 2,2-bis(diphenyl-1-yl)vinyl-1-yl, a stilbenyl group, a styrenyl group, and the like, but are not limited thereto.

In this specification the cycloalkyl group is not particularly limited, but the carbon number thereof is preferably 3 to 60. According to another embodiment, the carbon number of the cycloalkyl group is 3 to 30. According to another embodiment, the carbon number of the cycloalkyl group is 3 to 20. According to another embodiment, the carbon number of the cycloalkyl group is 3 to 6. Specific examples thereof include cyclopropyl, cyclobutyl, cyclopentyl, 3-methylcyclopentyl, 2,3-dimethylcyclopentyl, cyclohexyl, 3-methylcyclohexyl, 4-methylcyclohexyl, 2,3-dimethylcyclohexyl, 3,4,5-trimethylcyclohexyl, 4-tert-butylcyclohexyl, cycloheptyl, cyclooctyl, and the like, but are not limited thereto.

In this specification, an aryl group is not particularly limited, but the carbon number thereof is preferably 6 to 60, and it may be a monocyclic aryl group or a polycyclic aryl group. According to one embodiment, the carbon number of the aryl group is 6 to 30. According to one embodiment, the carbon number of the aryl group is 6 to 20. The aryl group may be a phenyl group, a biphenyl group, a terphenyl group or the like as the monocyclic aryl group, but is not limited thereto. The polycyclic aryl group includes a naphthyl group, an anthracenyl group, a phenanthrenyl group, a pyrenyl group, a perylenyl group, a chrysenyl group, a fluorenyl group, or the like, but is not limited thereto.

In this specification, the fluorenyl group may be substituted, and two substituents may linked with each other to form a spiro structure. When the fluorenyl group is substituted, it may become compounds such as those below. However, it is not limited to these.

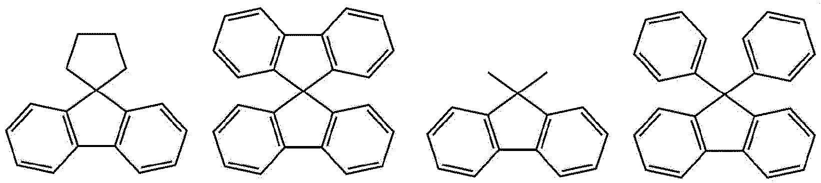

In this specification, a heteroaryl group is a heteroaryl group containing one or more of O, N, Si and S as a heteroatom and also having aromaticity, and the carbon number thereof is not particularly limited, but is preferably 2 to 60. Examples of the heteroaryl group include a thiophene group, a furan group, a pyrrole group, an imidazole group, a thiazole group, an oxazol group, an oxadiazol group, a triazol group, a pyridyl group, a bipyridyl group, a pyrimidyl group, a triazine group, an acridyl group, a pyridazine group, a pyrazinyl group, a quinolinyl group, a quinazoline group, a quinoxalinyl group, a phthalazinyl group, a pyridopyrimidinyl group, a pyridopyrazinyl group, a pyrazinopyrazinyl group, an isoquinoline group, an indole group, a carbazole group, a benzoxazole group, a benzoimidazole group, a benzothiazolyl group, a benzocarbazole group, a benzothiophene group, a dibenzothiophene group, a benzofuranyl group, a phenanthroline group, a thiadiazolyl group, an isoxazolyl group, an oxadiazolyl group, a thiadiazolyl group, a benzothiazolyl group, a phenothiazinyl group, a dibenzofuranyl group, and the like, but are not limited thereto.

**In** this specification, the aryl group in the aralkyl group, the aralkenyl group, the alkylaryl group and the arylamine group is the same as the examples of the aryl group as defined above. **In** this specification, the alkyl group in the aralkyl group, the alkylaryl group and the alkylamine group is the same as the examples of the alkyl group as defined above. **In** this specification, the heteroaryl in the heteroarylamine can be applied to the description of the heteroaryl as defined above. **In** this specification, the alkenyl group in the aralkenyl group is the same as the examples of the alkenyl group as defined above. **In** this specification, the description of the aryl group as defined above may be applied except that the arylene is a divalent group. In this specification, the description of the heterocyclic group as defined above can be applied except that the heteroarylene is a divalent group. In this specification, the description of the aryl group or cycloalkyl group as defined above can be applied except that the hydrocarbon ring is not a monovalent group but formed by combining two substituent groups. In this specification, the description of the heterocyclic group as defined above can be applied, except that the heterocycle is not a monovalent group but formed by combining two substituent groups.

In this specification, 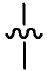 signifies a bond that is connected to another substituent.

According to one embodiment of the invention, a 3-hydroxypropionate (co)polymer composition comprising a 3-hydroxypropionate (co)polymer and an isocyanate compound is provided.

The inventors have completed the invention by confirming that in the case of a 3-hydroxypropionate (co)polymer composition containing a 3-hydroxypropionate (co)polymer and an isocyanate compound, it has excellent mechanical properties such as tensile strength and elongation while having a high molecular weight.

The 3-hydroxypropionate (co)polymer composition may be prepared by the 3-hydroxypropionate (co)polymer manufacturing method described later, but is not limited thereto.

The 3-hydroxypropionate (co)polymer included in the composition is a 3-hydroxypropionate (co)polymer in which 3-hydroxypropionic acid is (co)polymerized, and the isocyanate compound included in the composition may be a starting material that reacts with the 3-hydroxypropionate (co)polymer. Also, the 3-hydroxypropionate (co)polymer may be a (co)polymer in which the 3-hydroxypropionate (co)polymer with (co)polymerized 3-hydroxypropionic acid has reacted with isocyanate, and the isocyanate included in the composition may be remaining isocyanate after reacting with the (co)polymer.

The isocyanate is not particularly limited as long as it is a compound containing one or more isocyanate groups, but for example, it may be one or more selected from the group consisting of hexamethylene diisocyanate, L-lysine ethyl ester diisocyanate, 4,4'-diphenylmethane diisocyanate, 2,4'-diphenylmethane diisocyanate, p-phenylene diisocyanate, 1,5-naphthalene diisocyanate, and toluene diisocyanate.

Furthermore, the isocyanate may be included 0.1 parts by weight or more and 10.0 parts by weight or less, 0.3 parts by weight or more and 9.0 parts by weight or less, 0.5 parts by weight or more and 8.0 parts by weight or less, 0.8 parts by weight or more and 7.0 parts by weight or less, 1.0 parts by weight or more and 5.0 parts by weight or less, or 1.5 parts by weight or more and 4.0 parts by weight or less with respect to the 3-hydroxypropionate (co)polymer. If the content of isocyanate is too low relative to the 3-hydroxypropionate (co)polymer, the effect of increasing molecular weight due to the isocyanate reaction may not appear, and if the content of isocyanate is too high, the uniformity, quality, and processability of the product made from the finally produced copolymer may be reduced due to the formation of a crosslinked structure.

In the 3-hydroxyproprionate (co)polymer composition according to the above embodiment, the 3-hydroxyproprionate (co)polymer may be a first 3-hydroxyproprionate copolymer in which 3-hydroxypropionic acid and a diol are copolymerized.

The diol copolymerized with the 3-hydroxypropionic acid is not limited to, but preferably a diol containing hydroxyl groups at both ends, for example, it may be one or more selected from the group consisting of 1,2-propanediol, 1,3-propanediol, 1,3-butanediol, 1,4-butanediol, 1,5-pentanediol, 1,6-hexanediol, 1,7-heptanediol, 1,2-benzenediol, 1,3-benzenediol, 1,4-benzenediol, ethylene glycol, diethylene glycol, neopentyl glycol, and isosorbide. Also, to improve the yield of the 3-hydroxyproprionate copolymer and recover a high molecular weight copolymer, it is preferable to use 1,4-butanediol.

The content of the diol may be 0.05 parts by weight or more and 5.00 parts by weight or less, 0.10 parts by weight or more and 4.50 parts by weight or less, 0.30 parts by weight or more and 4.00 parts by weight or less, 0.50 parts by weight or more and 3.50 parts by weight or less, 1.00 parts by weight or more and 3.40 parts by weight or less, 1.50 parts by weight or more and 3.30 parts by weight or less, or 2.00 parts by weight or more and 3.00 parts by weight or less, per 100 parts by weight of the 3-hydroxypropionic acid. If the content of the diol is too low relative to the 3-hydroxypropionic acid, the effect of increasing the molecular weight of the copolymer may not appear even when isocyanate is reacted in a subsequent step. If the content of the diol is too high, the molecular weight of the copolymer may actually be lower.

The first 3-hydroxypropionate copolymer, produced by copolymerizing 3-hydroxypropionic acid and diol, may have both ends substituted with hydroxyl groups, thereby enabling the production of a high molecular weight copolymer through subsequent reaction with isocyanate.

The first 3-hydroxypropionate copolymer may be represented by the following chemical formula 1.

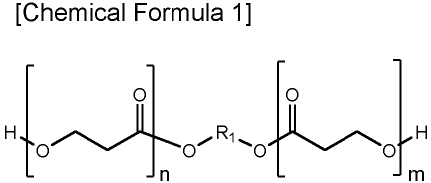

In Chemical Formula 1 above,
R₁ is a substituted or unsubstituted C₁₋₂₀ alkylene; a substituted or unsubstituted C₆₋₆₀ arylene; or a substituted or unsubstituted C₂₋₆₀ heteroarylene containing one or more heteroatoms selected from the group consisting of N, O, and S,
n and m are each independently integers from 5 to 1000.

For example, R₁ may be a substituted or unsubstituted C₂₋₁₀ alkylene; or a substituted or unsubstituted C₆₋₂₀ arylene. More preferably, R₁ may be ethylene, propylene, butylene, pentylene, hexylene, heptylene, phenylene, etc.

For example, n and m may each independently be integers from 10 to 900, 50 to 800, 100 to 700, or 150 to 600.

Furthermore, the first 3-hydroxypropionate copolymer may have a weight-average molecular weight of 2,000 or more and 100,000 or less, 5,000 or more and 80,000 or less, 8,000 or more and 60,000 or less, 10,000 or more and 40,000 or less, 15,000 or more and 35,000 or less, 15,000 or more and 30,000 or less, 15,000 or more and 25,000 or less, or 15,000 or more and 20,000 or less.

Additionally, the first 3-hydroxypropionate copolymer may have a number-average molecular weight of 2,000 or more and 15,000 or less, 5,000 or more and 13,000 or less, 7,000 or more and 11,000 or less, or 8,000 or more and 10,000 or less.

Moreover, the first 3-hydroxypropionate copolymer may have a polydispersity index (PDI) of 1.0 or more and 3.5 or less, 1.2 or more and 3.0 or less, 1.4 or more and 2.5 or less, or 1.6 or more and 2.0 or less.

Furthermore, the 3-hydroxypropionate (co)polymer may be a second 3-hydroxypropionate copolymer in which the first 3-hydroxy propionate copolymer, copolymerized from 3-hydroxypropionic acid and diol, has reacted with isocyanate.

The hydroxyl groups at both ends of the first 3-hydroxypropionate copolymer may undergo a urethane bonding reaction with isocyanate groups of the isocyanate to produce the second 3-hydroxypropionate copolymer. Due to this chain extension reaction, the molecular weight of the second 3-hydroxypropionate copolymer may be significantly increased, preventing issues such as the formation of cyclic oligomer byproducts that may reduce the copolymer's molecular weight. Additionally, the second 3-hydroxypropionate copolymer may have a higher weight-average molecular weight and number-average molecular weight compared to the first 3-hydroxypropionate copolymer.

The second 3-hydroxypropionate copolymer may include a repeating unit represented by the following Chemical Formula 2.

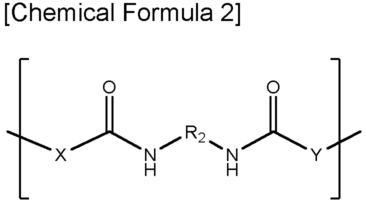

In the above Chemical Formula 2,
R₂ may be a single bond; a substituted or unsubstituted alkylene having 1 to 60 carbon atoms; a substituted or unsubstituted alkenylene having 1 to 60 carbon atoms; a substituted or unsubstituted arylene having 6 to 60 carbon atoms; or a substituted or unsubstituted heteroarylene having 2 to 60 carbon atoms containing one or more heteroatoms selected from the group consisting of N, O, S, and Si.

For example, R₂ may be an ethyl ester-substituted or unsubstituted alkylene having 1 to 20 carbon atoms, an arylene having 6 to 20 carbon atoms, or a heteroarylene having 2 to 20 carbon atoms containing one or more heteroatoms selected from the group consisting of N, O, S, and Si. Additionally, R₂ may be methylene, ethylene, 1,3-propylene, 1,2-propylene, 1,4-butylene, 1,3-butylene, 1,2-butylene, 1,5-pentylene, 1,4-pentylene, 1,3-pentylene, 1,2-pentylene, 1,6-hexylene, 1,5-hexylene, 1,4-hexylene, 1,3-hexylene, 1,2-hexylene, 1,7-heptylene, 1,6-heptylene, 1,5-heptylene, 1,4-heptylene, 1,3-heptylene, 1,2-heptylene, ethyl ester-substituted ethylene, ethyl ester-substituted propylene, ethyl ester-substituted butylene, ethyl ester-substituted pentylene, ethyl ester-substituted hexylene, 1,2-phenylene, 1,3-phenylene, 1,4-phenylene, 1,5-naphthalene, 1,6-naphthalene, 1,7-naphthalene, 1,8-naphthalene, tolyene, 2,3-pyridylene, 2,4-pyridylene, 2,5-pyridylene, 2,6-pyridylene, 4,4'-methylenediphenylene, 3,3'-methylenediphenylene, 2,2'-methylenediphenylene, 2,4'-methylenediphenylene, 4,4'-ethylenediphenylene, 3,3'-ethylenediphenylene, 2,2'-ethylenediphenylene, or 2,4'-ethylenediphenylene.

Furthermore, in Chemical Formula 2 above, X and Y each independently represent Chemical Formula 2-1 or Chemical Formula 2-2 below, but at least one of them may be represented by Chemical Formula 2-1 below.

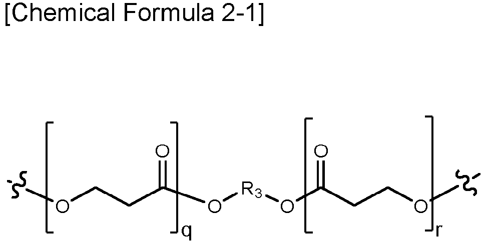

In Chemical Formula 2-1 above,
R₃ may be a substituted or unsubstituted C₁₋₂₀ alkylene; a substituted or unsubstituted C₆₋₆₀ arylene; or a substituted or unsubstituted C₂₋₆₀ heteroarylene containing one or more heteroatoms selected from the group consisting of N, O, and S.

For example, R₃ may be a substituted or unsubstituted C₂₋₁₀ alkylene; or a substituted or unsubstituted C₆₋₂₀ arylene. More preferably, may be ethylene, propylene, butylene, pentylene, hexylene, heptylene, phenylene, etc.

Additionally, q and r may each independently be an integer from 5 to 1000, for example, q and r may each independently be an integer from 10 to 900, 50 to 800, 100 to 700, or 150 to 600.

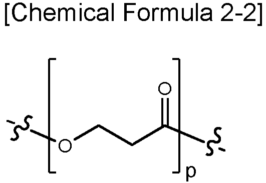

In Chemical Formula 2-2 above, p may be an integer from 5 to 1000, for example, p may be an integer from 10 to 900, 50 to 800, 100 to 700, or 150 to 600.

The terminal group of the second 3-hydroxypropionate copolymer may be selected from the terminal groups represented by the following Chemical Formulas 3 to 5.

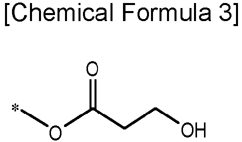

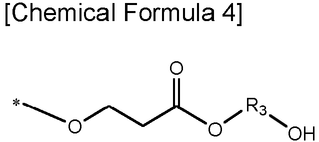

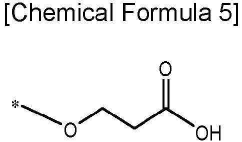

In the above Chemical Formula 4,
R₃ may be a substituted or unsubstituted C₁₋₂₀ alkylene; a substituted or unsubstituted C₆₋₆₀ arylene; or a substituted or unsubstituted C₂₋₆₀ heteroarylene containing one or more heteroatoms selected from the group consisting of N, O, and S. The R₃ may be a substituted or unsubstituted C₂₋₁₀ alkylene; or substituted or unsubstituted C₆₋₂₀ arylene. More preferably, R₁ may be ethylene, propylene, butylene, pentylene, hexylene, heptylene, phenylene, etc.

Also, in Chemical Formulas 3 to 5, * may be a point where each is connected to the main chain or terminal group of the copolymer.

In addition, the second 3-hydroxyproprionate copolymer may have an acid value of 100 meq/kg or less, 95 meq/kg or less, 90 meq/kg or less, 85 meq/kg or less, 80 meq/kg or less, 75 meq/kg or less, 1 meq/kg or more and 70 meq/kg or less, 2 meq/kg or more and 65 meq/kg or less, 3 meq/kg or more and 60 meq/kg or less, 4 meq/kg or more and 55 meq/kg or less, 5 meq/kg or more and 50 meq/kg or less, 7 meq/kg or more and 45 meq/kg or less, 8 meq/kg or more and 40 meq/kg or less, 10 meq/kg or more and 35 meq/kg or less, or 15 meq/kg or more and 30 meq/kg or less. Within this acid value range, the second 3-hydroxyproprionate copolymer may exhibit high molecular weight while also demonstrating excellent tensile strength, modulus, and elongation characteristics. The acid value may be measured by titration using a 0.02 N potassium methoxide solution as the titrant.

Furthermore, the second 3-hydroxypropionate copolymer may have a weight-average molecular weight of 40,000 or more, 41,000 or more to 400,000 or less, 42,000 or more to 380,000 or less, or 43,000 or more to 350,000 or less.

Additionally, the second 3-hydroxypropionate copolymer may have a number-average molecular weight of 15,000 or more, 16,000 or more to 200,000 or less, or 17,000 or more to 150,000 or less.

Moreover, the second 3-hydroxypropionate copolymer may have a polydispersity index (PDI) of 1.5 or more and 7.0 or less, 2.0 or more and 6.5 or less, 2.3 or more and 6.0 or less, or 2.5 or more and 5.5 or less.

According to the above embodiment, the 3-hydroxyproprionate (co)polymer composition may further include an oxazoline compound. Accordingly, the composition may include a 3-hydroxyproprionate (co)polymer, isocyanate, and oxazoline.

The oxazoline may be a starting material that has reacted with the 3-hydroxyproprionate (co)polymer, or it may be a residue remaining after reacting with the 3-hydroxyproprionate (co)polymer.

The oxazoline compound is not particularly limited as long as it is a compound containing one or more oxazoline groups, but it may be, for example, one or more selected from the group consisting of 1,3-phenylene bisoxazoline (2,2'-(1,3-phenylene)bis(2-oxazoline)), 1,4-phenylene bisoxazoline (2,2'-(1,4-phenylene)bis(2-oxazoline)), and 2,6-pyridylene bisoxazoline (2,2'-(2,6-pyridylene)-bis(2-oxazoline)).

Furthermore, the oxazoline compound may be added in an amount of 0.001 parts by weight or more and 5.000 parts by weight or less, 0.005 parts by weight or more and 4.000 parts by weight or less, 0.010 parts by weight or more and 3.000 parts by weight or less, or 0.050 parts by weight or more and 2.500 parts by weight or less per 100 parts by weight of the 3-hydroxyproprionate (co)polymer. If the amount of the oxazoline compound is too low compared to the 3-hydroxyproprionate (co)polymer, the molecular weight of the (co)polymer may not increase. If the amount of the oxazoline compound is too high compared to the (co)polymer, by-products may form or a crosslinked structure may develop.

Additionally, the weight ratio of the oxazoline compound to the isocyanate compound may be 1:0.0001 to 1:10, 1:0.0010 to 1:8, 1:0.0020 to 1:6, 1:0.0050 to 1:5, 1:0.0100 to 1:4, 1:0.0500 to 1:3, or 1:0.1000 to 1:2. If the content of the isocyanate compound is too high relative to the oxazoline compound, crosslinking may occur before the molecular weight of the (co)polymer increases, making it difficult to produce a high molecular weight (co)polymer. If the content of the isocyanate compound is too low relative to the oxazoline compound, it may be difficult to produce a high molecular weight (co)polymer.

The 3-hydroxyproprionate (co)polymer may be a (co)polymer that has reacted with isocyanate and oxazoline compounds. The oxazoline compound may react with the functional groups at the ends of the repeating units of poly(3-hydroxypropionic acid) to form two peptide bonds (-CONH-). The isocyanate compound may react with the functional groups at the ends of the repeating units of poly(3-hydroxypropionic acid) to form two peptide bonds.

For example, the 3-hydroxypropionate (co)polymer may include a repeating unit represented by the following Chemical Formula 6.

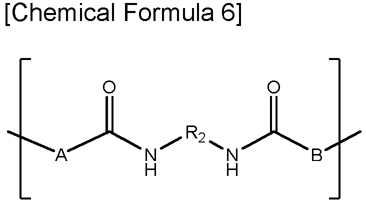

In the above Chemical Formula 6,
R₂ may be a single bond; a substituted or unsubstituted alkylene having 1 to 60 carbon atoms; a substituted or unsubstituted alkenylene having 1 to 60 carbon atoms; a substituted or unsubstituted arylene having 6 to 60 carbon atoms; or a substituted or unsubstituted heteroarylene having 2 to 60 carbon atoms containing one or more heteroatoms selected from the group consisting of N, O, S, and Si.

For example, R₂ may be ethyl ester substituted or unsubstituted alkylene having 1 to 20 carbon atoms, arylene having 6 to 20 carbon atoms, or heteroarylene having 2 to 20 carbon atoms containing one or more heteroatoms selected from the group consisting of N, O, S, and Si. Furthermore, R₂ may be methylene, ethylene, 1,3-propylene, 1,2-propylene, 1,4-butylene, 1,3-butylene, 1,2-butylene, 1,5-pentylene, 1,4-pentylene, 1,3-pentylene, 1,2-pentylene, 1,6-hexylene, 1,5-hexylene, 1,4-hexylene, 1,3-hexylene, 1,2-hexylene, 1,7-heptylene, 1,6-heptylene, 1,5-heptylene, 1,4-heptylene, 1,3-heptylene, 1,2-heptylene, ethyl ester substituted ethylene, ethyl ester substituted propylene, ethyl ester substituted butylene, ethyl ester substituted pentylene, ethyl ester substituted hexylene, 1,2-phenylene, 1,3-phenylene, 1,4-phenylene, 1,5-naphthalene, 1,6-naphthalene, 1,7-naphthalene, 1,8-naphthalene, tolyene, 2,3-pyridylene, 2,4-pyridylene, 2,5-pyridylene, 2,6-pyridylene, 4,4'-methylenediphenylene, 3,3'-methylenediphenylene, 2,2'-methylenediphenylene, 2,4'-methylenediphenylene, 4,4'-ethylenediphenylene, 3,3'-ethylenediphenylene, 2,2'-ethylenediphenylene, or 2,4'-ethylenediphenylene.

Furthermore, in the above Chemical Formula 2, A and B are each independently represented by Chemical Formula 6-1, Chemical Formula 6-2, or Chemical Formula 6-3 below, but at least one may be represented by Chemical Formula 6-1 below.

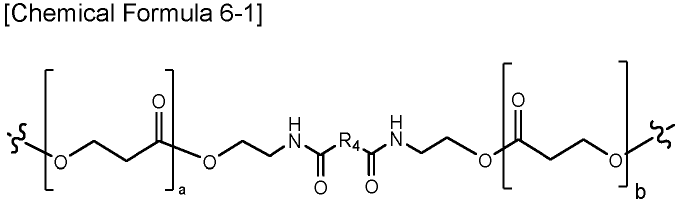

In Chemical Formula 6-1 above,
R₄ may be a single bond; a substituted or unsubstituted alkylene having 1 to 60 carbon atoms; a substituted or unsubstituted alkenylene having 1 to 60 carbon atoms; a substituted or unsubstituted arylene with 6 to 60 carbon atoms; or a substituted or unsubstituted heteroarylene having 2 to 60 carbon atoms containing one or more heteroatoms selected from the group consisting of N, O, S, and Si.

For example, R₄ may be ethyl ester substituted or unsubstituted alkylene having 1 to 20 carbon atoms, arylene having 6 to 20 carbon atoms, or heteroarylene having 2 to 20 carbon atoms containing one or more heteroatoms selected from the group consisting of N, O, S, and Si. Also, R₂ may be methylene, ethylene, 1,3-propylene, 1,2-propylene, 1,4-butylene, 1,3-butylene, 1,2-butylene, 1,5-pentylene, 1,4-pentylene, 1,3-pentylene, 1,2-pentylene, 1,6-hexylene, 1,5-hexylene, 1,4-hexylene, 1,3-hexylene, 1,2-hexylene, 1,7-heptylene, 1,6-heptylene, 1,5-heptylene, 1,4-heptylene, 1,3-heptylene, 1,2-heptylene, ethyl ester substituted ethylene, ethyl ester substituted propylene, ethyl ester substituted butylene, ethyl ester substituted pentylene, ethyl ester substituted hexylene, 1,2-phenylene, 1,3-phenylene, 1,4-phenylene, 1,5-naphthalene, 1,6-naphthalene, 1,7-naphthalene, 1,8-naphthalene, tolyene, 2,3-pyridylene, 2,4-pyridylene, 2,5-pyridylene, 2,6-pyridylene, 4,4'-methylenediphenylene, 3,3'-methylenediphenylene, 2,2'-methylenediphenylene, 2,4'-methylenediphenylene, 4,4'-ethylenediphenylene, 3,3'-ethylenediphenylene, 2,2'-ethylenediphenylene, or 2,4'-ethylenediphenylene.

Furthermore, a and b may each independently be an integer from 10 to 5,000, for example, an integer from 100 to 4,000, 300 to 3,000, or 500 to 1,000.

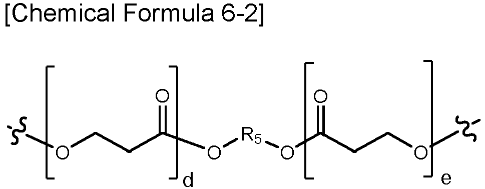

In Chemical Formula 6-2 above,
R₅ may be a substituted or unsubstituted C₁₋₂₀ alkylene; a substituted or unsubstituted C₆₋₆₀ arylene; or a substituted or unsubstituted C₂₋₆₀ heteroarylene containing one or more heteroatoms selected from the group consisting of N, O, and S.

For example, R₅ may be a substituted or unsubstituted C₂₋₁₀ alkylene; or a substituted or unsubstituted C₆₋₂₀ arylene. More preferably, R₅ may be ethylene, propylene, butylene, pentylene, hexylene, heptylene, phenylene, etc.

Additionally, d and e may each independently be an integer from 5 to 1000, for example, d and e may each independently be an integer from 10 to 900, 50 to 800, 100 to 700, or 150 to 600.

d and e are each independently an integer from 5 to 1000.

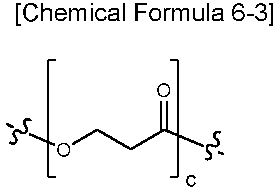

In the above Chemical Formula 6-3,
c may be an integer from 5 to 1000, for example, n and m may each independently be an integer from 10 to 900, 50 to 800, 100 to 700, or 150 to 600.

The 3-hydroxyproprionate (co)polymer containing the repeating unit represented by Chemical Formula 6 above may have terminal groups of Chemical Formula 7 to 9 below.

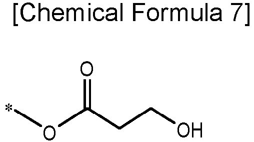

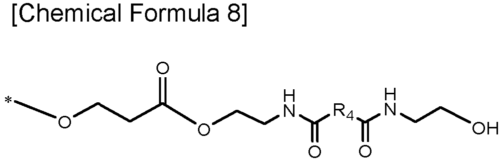

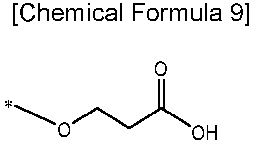

In the above Chemical Formula 8,
R₄ may be a single bond; a substituted or unsubstituted alkylene having 1 to 60 carbon atoms; a substituted or unsubstituted alkenylene having 1 to 60 carbon atoms; a substituted or unsubstituted arylene having 6 to 60 carbon atoms; or a substituted or unsubstituted heteroarylene having 2 to 60 carbon atoms containing one or more heteroatoms selected from the group consisting of **N,** O, S, and Si.

In addition, in the above Chemical Formulas 7 to 9, * may be a point where it connects to the main chain or terminal group of the copolymer.

Furthermore, the 3-hydroxyproprionate (co)polymer containing the repeating unit represented by Chemical Formula 6 may have an acid value of 20 meq/kg or less, 0.1 meq/kg or more and 18 meq/kg or less, 0.2 meq/kg or more and 17 meq/kg or less, 0.3 meq/kg or more and 15 meq/kg or less, 0.4 meq/kg or more and 13 meq/kg or less, 0.5 meq/kg or more and 11 meq/kg or less, 0.7 meq/kg or more and 10 meq/kg or less, 0.8 meq/kg or more and 9 meq/kg or less, 1.0 meq/kg or more and 8 meq/kg or less, or 1.5 meq/kg or more and 5 meq/kg or less. Within this acid value range, the 3-hydroxyproprionate (co)polymer may exhibit high molecular weight while also demonstrating excellent tensile strength, modulus, and elongation characteristics. The acid value may be measured by titration using a 0.02 N Potassium methoxide solution as the titration solution.

According to another embodiment of the invention, a poly(lactic acid-b-3-hydroxypropionic acid) block copolymer composition comprising a poly(lactic acid-b-3-hydroxypropionic acid) block copolymer and an isocyanate compound is provided.

The poly(lactic acid-b-3-hydroxypropionic acid) composition may be prepared by the poly(lactic acid-b-3-hydroxypropionic acid) manufacturing method described later, but is not limited thereto.

The poly(lactic acid-b-3-hydroxypropionic acid) block copolymer may be a block copolymer in which lactide is ring-opening polymerized onto the second 3-hydroxypropionate copolymer formed by the reaction of isocyanate with the first 3-hydroxypropionate copolymer, which is a copolymer of 3-hydroxypropionic acid and diol. Additionally, the isocyanate in the composition may be the residual remaining after reacting with the first 3-hydroxypropionate copolymer.

Furthermore, the poly(lactic acid-b-3-hydroxypropionic acid) block copolymer composition may further include an oxazoline compound. Accordingly, the poly(lactic acid-b-3-hydroxypropionic acid) block copolymer may be a block copolymer in which lactide is ring-opening polymerized onto a 3-hydroxypropionate (co)polymer formed by the reaction of 3-hydroxypropionate polymer, isocyanate, and oxazoline compound.

The above poly(lactic acid-b-3-hydroxypropionic acid) block copolymer may have a weight-average molecular weight of 120,000 or more, and more specifically, it may be 120,000 or more and 800,000 or less, 150,000 or more and 500,000 or less, 200,000 or more and 400,000 or less, or 220,000 or more and 300,000 or less. If the weight-average molecular weight of the poly(lactic acid-b-3-hydroxypropionic acid) block copolymer is excessively small, the overall mechanical properties may be significantly reduced.

The poly(lactic acid-b-3-hydroxypropionic acid) block copolymer may have a number-average molecular weight of 100,000 or more, and more specifically, it may be 100,000 or more and 700,000 or less, 120,000 or more and 500,000 or less, 150,000 or more and 400,000 or less, or 200,000 or more and 300,000 or less.

The poly(lactic acid-b-3-hydroxypropionic acid) block copolymer may have a polydispersity index of 2.0 or more and 10.0 or less, more specifically 2.5 or more, 3.0 or more, or 3.5 or more, and 8.0 or less, or 6.0 or less, or 5.0 or less.

The poly(lactic acid-b-3-hydroxypropionic acid) block copolymer may have an elongation at break of 200% or more, 300% or more, 400% or more, 500% or more, or 600% or more, and 1000% or less.

According to another embodiment of the present invention, a method for producing a 3-hydroxypropionate (co)polymer is provided, comprising:
producing a 3-hydroxypropionate (co)polymer by (co)polymerizing 3-hydroxypropionic acid in a reactor; and
adding an isocyanate compound to the reactor to react with the 3-hydroxypropionate (co)polymer.

The (co)polymerization may be carried out under a sulfonic acid-based catalyst. The sulfonic acid-based catalyst is not particularly limited as long as it contains one or more sulfonic groups, but may be, for example, p-toluenesulfonic acid, m-xylene-4-sulfonic acid, 2-mesitylenesulfonic acid, or p-xylene-2-sulfonic acid. The catalyst may be used in an amount of 0.01 to 0.5 mol% based on 3-hydroxypropionic acid.

The step of producing the 3-hydroxypropionate (co)polymer in the reactor by (co)polymerizing 3-hydroxypropionic acid may be a step of producing the first 3-hydroxypropionate copolymer by copolymerizing the 3-hydroxypropionic acid and a diol.

The process of producing the first 3-hydroxypropionate copolymer may include a step of producing an oligomer by copolymerizing 3-hydroxypropionic acid and a diol (step 1) and a step of polymerizing the oligomer to produce a 3-hydroxypropionate copolymer (step 2).

The polymerization reaction of step 1 may be a melt polymerization reaction, and melt polymerization means that the reactants, 3-hydroxypropionic acid and diol, and the product, oligomer, maintain a liquid state. Additionally, the polymerization reaction of step 1 may be carried out at a temperature of 50°C or higher and 150°C or lower, and a pressure of 1 torr or higher and 200 torr or lower. For example, the reaction temperature of step 1 may be 60°C or higher, 70°C or higher, 80°C or higher, 85°C or higher, or 90°C or higher, and 140°C or lower, 130°C or lower, 120°C or lower, or 110°C or lower. Furthermore, step 1 may be performed under a pressure of 2 torr or higher, 5 torr or higher, 10 torr or higher, or 15 torr or higher, and 150 torr or lower, 130 torr or lower, 110 torr or lower, or 100 torr or lower. Also, the reaction time of step 1 may be appropriately considered in view of the molecular weight and yield of the produced oligomer, and preferably, it is desirable to perform for 1 hour to 10 hours, 1.5 hours to 8 hours, or 2 hours to 5 hours.

The polymerization reaction of step 2 may also be a melt polymerization reaction and may be carried out at a temperature of 70°C or higher and 150°C or lower. The reaction temperature of step 2 may be 75°C or higher, 80°C or higher, 85°C or higher, 90°C or higher, or 95°C or higher, and 140°C or lower, 130°C or lower, 120°C or lower, or 110°C or lower. Additionally, the pressure of step 2 may be 2 torr or higher, 5 torr or higher, 10 torr or higher, or 15 torr or higher, and 150 torr or lower, 130 torr or lower, 110 torr or lower, or 100 torr or lower. The reaction time of step 2 may be appropriately considered in view of the molecular weight and yield of the produced polymer, and preferably, it may be performed for 1 hour to 60 hours, 5 hours to 50 hours, 10 hours to 40 hours, or 15 hours to 30 hours.

Meanwhile, since step 2 is performed following step 1, the catalyst added in step 1 may also participate in the reaction in step 2. Furthermore, steps 1 and 2 may be carried out continuously.

The first 3-hydroxypropionate copolymer may contain 0.05 parts by weight or more and 5.00 parts by weight or less, 0.10 parts by weight or more and 4.50 parts by weight or less, 0.30 parts by weight or more and 4.00 parts by weight or less, 0.50 parts by weight or more and 3.50 parts by weight or less, 1.00 parts by weight or more and 3.40 parts by weight or less, 1.50 parts by weight or more and 3.30 parts by weight or less, or 2.00 parts by weight or more and 3.00 parts by weight of the diol or less per 100 parts by weight of the 3-hydroxypropionic acid. If the content of the diol is excessively low relative to the 3-hydroxypropionic acid, even if isocyanate is reacted in a subsequent step, there may be no effect of increasing the molecular weight of the copolymer. If the content of the diol is excessively high, the molecular weight of the copolymer may actually be lower.

The step of introducing an isocyanate compound into the reactor and reacting it with the 3-hydroxypropionate (co)polymer may include a step of reacting the first 3-hydroxypropionate copolymer with isocyanate to produce a second 3-hydroxypropionate copolymer.

Meanwhile, the reaction timing of the first 3-hydroxypropionate copolymer and isocyanate is not particularly limited, but to produce a high molecular weight copolymer, it is preferable to react at the polymerization endpoint of the first 3-hydroxypropionate copolymer. For example, isocyanate may be introduced into the reactor and reacted when the polymerization reaction has progressed 70% or more, 80% or more, 85% or more, 90% or more, 95% or more, or up to 100%. The reaction timing, that is, when the polymerization reaction has progressed 70% or more, may be derived from the conversion rate of 3-hydroxypropionic acid to 3-hydroxypropionate copolymer. Also, the conversion rate to the copolymer may be measured or confirmed using an Ampere Meter or nuclear magnetic resonance (NMR) device.

Furthermore, the isocyanate may be 0.1 parts by weight or more and 10.0 parts by weight or less, 0.3 parts by weight or more and 9.0 parts by weight or less, 0.5 parts by weight or more and 8.0 parts by weight or less, 0.8 parts by weight or more and 7.0 parts by weight or less, 1.0 parts by weight or more and 5.0 parts by weight or less, or 1.5 parts by weight or more and 4.0 parts by weight or less with respect to the first 3-hydroxypropionate copolymer. If the content of isocyanate is too low relative to 3-hydroxypropionic acid, the molecular weight enhancement effect due to the isocyanate reaction may not appear, and if the content of isocyanate is too high, the uniformity, quality, and processability of the product made from the final copolymer may be reduced due to the formation of a crosslinked structure.

The reaction with isocyanate may take place at a temperature of 80°C or more and 180°C or less for 5 minutes or more 300 minutes or less. For example, the reaction with isocyanate may occur at temperatures of 90°C or more and 170°C or less, 100°C or more and 160°C or less, 110°C or more and 150°C or less, or 120°C or more and 140°C or less, for durations of 10 minutes or more 280 minutes or less, 20 minutes or more 260 minutes or less, 40 minutes or more 240 minutes or less, 60 minutes or more 220 minutes or less, or 90 minutes or more 200 minutes or less.

The step of adding an isocyanate compound to the above reactor and reacting it with the 3-hydroxypropionate (co)polymer may include adding an oxazoline compound to the reactor and reacting it with the 3-hydroxypropionate (co)polymer.

As the oxazoline compound and isocyanate compound are added to the reactor, they may react with the functional groups at the ends of the 3-hydroxypropionate (co)polymer. As a result, the ends of the 3-hydroxypropionate (co)polymer may be capped with the oxazoline compound and isocyanate compound. Furthermore, by capping the ends of the 3-hydroxypropionate (co)polymer with the oxazoline compound and isocyanate compound, the problem of molecular weight reduction due to the formation of cyclic oligomer by-products may be prevented, allowing the production of poly(3-hydroxypropionic acid) with high molecular weight and excellent mechanical properties such as tensile strength and elongation.

Meanwhile, the timing of adding the oxazoline compound and isocyanate compound to the reactor is not particularly limited, but it is preferable to add them at the end of the polymerization reaction of the 3-hydroxypropionate (co)polymer to produce a high molecular weight 3-hydroxypropionate (co)polymer. For example, the oxazoline compound and isocyanate compound may be added when the polymerization reaction has progressed 70% or more, 80% or more, 85% or more, 90% or more, 95% or more, to 100% or less. The timing of adding the oxazoline compound and isocyanate compound, that is, when the polymerization reaction has progressed 70% or more, may be derived from the conversion rate of 3-hydroxypropionic acid to 3-hydroxypropionate (co)polymer. Additionally, the conversion rate to the 3-hydroxypropionate (co)polymer may be measured or confirmed using an ampere meter or nuclear magnetic resonance (NMR) device.

Furthermore, the step of adding the oxazoline compound and isocyanate compound to the reactor may involve adding the oxazoline compound to the reactor first, followed by the isocyanate compound. For example, the oxazoline compound may be added to the reactor, stirred for 30 minutes or more 6 hours or less, 1 hour or more and 5 hours or less, or 2 hours or more and 4 hours or less, and then the isocyanate compound may be added.

Additionally, the oxazoline compound may be added in an amount of 0.001 parts by weight or more and 5.000 parts by weight or less, 0.005 parts by weight or more and 4.000 parts by weight or less, 0.010 parts by weight or more and 3.000 parts by weight or less, or 0.050 parts by weight or more and 2.500 parts by weight or less per 100 parts by weight of the 3-hydroxypropionate (co)polymer. **If** the amount of the oxazoline compound added is too low compared to the 3-hydroxypropionate (co)polymer, the molecular weight of the 3-hydroxypropionate (co)polymer may not increase. **If** the amount of the oxazoline compound added is too high compared to the 3-hydroxypropionate (co)polymer, by-products may be generated or a cross-linked structure may form.

Furthermore, the isocyanate compound may be added in an amount of 0.001 parts by weight or more and 5.000 parts by weight or less, 0.005 parts by weight or more and 4.500 parts by weight or less, 0.010 parts by weight or more and 4.000 parts by weight or less, 0.050 parts by weight or more and 3.500 parts by weight or less, 0.100 parts by weight or more and 3.400 parts by weight or less, 0.200 parts by weight or more and 3.300 parts by weight or less, or 0.300 parts by weight or more and 3.200 parts by weight or less per 100 parts by weight of the 3-hydroxypropionate (co)polymer. If the amount of the isocyanate compound added is too low compared to the 3-hydroxypropionate (co)polymer, the crystallization of the polymer may occur slowly, resulting in inferior mechanical properties such as tensile characteristics. If the amount of the isocyanate compound added is too high compared to the 3-hydroxypropionate

(co)polymer, cross-linking may occur before the molecular weight of the polymer increases, making it difficult to produce a high molecular weight polymer.

According to another embodiment of the present invention, a method for producing a poly(lactic acid-b-3-hydroxypropionic acid) block copolymer is provided, comprising:
producing a 3-hydroxypropionate (co)polymer by (co)polymerizing 3-hydroxypropionic acid in a reactor;
adding an isocyanate compound to the reactor and reacting it with the 3-hydroxypropionate (co)polymer; and
producing a poly(lactic acid-b-3-hydroxypropionic acid) block copolymer by ring-opening polymerizing lactide monomer onto the 3-hydroxypropionate (co)polymer.

The steps of producing the 3-hydroxypropionate (co)polymer by (co)polymerizing 3-hydroxypropionic acid in a reactor and adding an isocyanate compound to the reactor and reacting it with the 3-hydroxypropionate (co)polymer are as described above in the method for producing the 3-hydroxypropionate (co)polymer according to the other embodiment.

For example, the step of producing the 3-hydroxypropionate (co)polymer by (co)polymerizing 3-hydroxypropionic acid in a reactor may be a step of producing a first 3-hydroxypropionate copolymer by copolymerizing the 3-hydroxypropionic acid and a diol.

Additionally, an oxazoline compound may be further added to the reactor to react with the 3-hydroxypropionate (co)polymer.

The producing poly(lactic acid-b-3-hydroxypropionic acid) block copolymer by ring-opening polymerizing lactide monomer onto the 3-hydroxypropionate (co)polymer may be performed in the presence of a lactide ring-opening catalyst.

The ring-opening polymerization may be carried out under one or more catalysts selected from the group consisting of organometallic complex catalysts and organic catalysts. For example, the organometallic complex catalyst may be a catalyst represented by the following chemical formula 10.

[Chemical Formula 10] MA¹ₚA²₂₋ₚ

In Chemical Formula 10,
M is Al, Mg, Zn, Ca, Sn, Fe, Y, Sm, Lu, Ti or Zr,
p is an integer from 0 to 2,
A¹ and A² are each independently alkoxy or carboxyl groups.

More specifically, the catalyst may be tin(II) 2-ethylhexanoate (Sn(Oct)₂; hereinafter also referred to as Tin Octoate).

Meanwhile, the organic catalyst may generally be used without limitation in its composition if it is typically used in the manufacture of polylactide resin by ring-opening polymerization of lactide monomers. For example, the organic catalyst may be one or more selected from the group consisting of 1,5,7-triazabicyclo[4.4.0]dec-5-ene (TBD), 1,8-diazabicyclo[5.4.0]undec-7-ene (DBU), 7-methyl-1,5,7-triazabicyclo[4.4.0]dec-5-ene (MTBD), 4-dimethylaminopyridine (DMAP), 4-(1-pyrrolidinyl)pyridine (PPY), imidazole, triazolium, thiourea, tertiary amines, and creatinine.

The content of the catalyst may be 0.0001 to 10 mol%, 0.005 to 8 mol%, 0.05 to 5 mol%, or 0.09 to 3 mol% based on 100 mol% of the lactide monomer. If the content of the catalyst is too low relative to 100 mol% of the lactide monomer, the polymerization activity may be insufficient, and if the content of the catalyst is too high, the residual catalyst amount in the manufactured block copolymer may increase, leading to decomposition or molecular weight reduction of the copolymer due to depolymerization such as transesterification reactions. Additionally, the ring-opening polymerization may be carried out at a temperature of 150 to 200 °C, 160 to 190 °C, or 170 to 180 °C, and may be conducted for 5 minutes to 24 hours, 30 minutes to 20 hours, 1 hour to 15 hours, or 2 hours to 10 hours.

In the block copolymer, the weight ratio of the lactide to the 3-hydroxypropionate (co)polymer may be 99:1 to 50:50, 98:2 to 55:45, 97:3 to 60:40, 96:4 to 70:30, or 95:5 to 80:20. If the 3-hydroxypropionate (co)polymer is included in too small an amount relative to the lactide, the brittleness may increase, and if the 3-hydroxypropionate (co)polymer is included in too large an amount relative to the lactide, the molecular weight may decrease, potentially reducing processability and heat stability.

### [Advantageous Effects]

As described above, the present invention may provide 3-hydroxypropionate (co)polymer compositions and poly(lactic acid-b-3-hydroxypropionic acid) block copolymer compositions with high molecular weight and excellent tensile strength, modulus, and elongation. the present invention may also provide methods for producing such 3-hydroxypropionate (co)polymers and poly(lactic acid-b-3-hydroxypropionic acid) block copolymers.

### [DETAILED DESCRIPTION OF THE EMBODIMENTS]

Hereinafter, embodiments of the present disclosure will be explained in detail with reference to examples. However, the following examples are for illustrative purposes only, and the detailed description of the present disclosure is not limited by these examples.

### Example 1

60 g of 3-hydroxypropionic acid and 0.42 g (1 mol%) of 1,4-butanediol were added to an oil bath and reacted at 90°C and 100 Torr for 2 hours. Then, 176 mg of p-toluenesulfonic acid (p-TSA) catalyst was added to the oil bath. The reaction was carried out under reduced pressure at 20 Torr for 2 hours, followed by a polymerization reaction at 1 Torr or less for 24 hours to produce a copolymer. After the reaction was completed, the reaction product was dissolved in chloroform at a ratio of 10 g/50 mL and extracted with 500 mL of methanol to obtain the copolymer, which was then vacuum-dried for 12 hours.

Subsequently, 20 g of the copolymer was added to an oil bath under a nitrogen atmosphere, and 0.19 ml of hexamethylene diisocyanate was added. The mixture was stirred and reacted at 140°C for 180 minutes to produce a 3-hydroxypropionate copolymer.

### Example 2

A 3-hydroxypropionate copolymer was prepared in the same manner as in Example 1, except that 0.26 ml of hexamethylene diisocyanate was used instead of 0.19 ml of hexamethylene diisocyanate.

### Example 3

A 3-hydroxypropionate copolymer was prepared in the same manner as in Example 1, except that 0.34 ml of hexamethylene diisocyanate was used instead of 0.19 ml of hexamethylene diisocyanate.

### Example 4

A 3-hydroxypropionate copolymer was prepared in the same manner as in Example 1, except that 0.39 ml of hexamethylene diisocyanate was added and stirred and reacted for 90 minutes instead of adding 0.19 ml of hexamethylene diisocyanate and stirring and reacting for 180 minutes.

### Example 5

A 3-hydroxypropionate copolymer was prepared in the same manner as in Example 1, except that 0.42 ml of hexamethylene diisocyanate was added and stirred and reacted for 90 minutes instead of adding 0.19 ml of hexamethylene diisocyanate and stirring and reacting for 180 minutes.

### Example 6

A 3-hydroxypropionate copolymer was prepared in the same manner as in Example 1, except that 0.48 ml of hexamethylene diisocyanate was added and stirred and reacted at 120°C for 120 minutes instead of adding 0.19 ml of hexamethylene diisocyanate and stirring and reacting at 140°C for 180 minutes.

### Example 7

100 ml of a 60% aqueous solution of 3-hydroxypropionic acid was added to a 100 ml Schlenk flask, and approximately 60% of the water in the 3-hydroxypropionic acid was removed at 90°C and 100 Torr for 2 hours. Then, 0.2112 parts by weight of p-toluenesulfonic acid (p-TSA) catalyst per 100 parts by weight of 3-hydroxypropionic acid was added to the reaction flask, and a melt polycondensation reaction was carried out at 90°C and 1 Torr for 24 hours. After the reaction was completed, the reaction product was dissolved in chloroform at a ratio of 10 g/50 mL and extracted with 500 mL of methanol to obtain poly(3-hydroxypropionic acid).

Subsequently, 10 g of the poly(3-hydroxypropionic acid) was added to a 100 ml Schlenk flask and dried at 40°C for 12 hours. Then, 0.234 g of 1,3-phenylene bisoxazoline was added and stirred at 160°C for 2 hours. After that, 0.053 g of hexamethylene diisocyanate was added and stirred at 100°C for 90 minutes.

### Example 8

Poly(3-hydroxypropionic acid) was prepared in the same manner as in Example 7, except that 0.071 g of L-lysine ethyl ester diisocyanate was used instead of 0.053 g of hexamethylene diisocyanate.

### Example 9

Poly(3-hydroxypropionic acid) was prepared in the same manner as in Example 7, except that 0.142 g of L-lysine ethyl ester diisocyanate was used instead of 0.053 g of hexamethylene diisocyanate.

### Example 10

Poly(3-hydroxypropionic acid) was prepared in the same manner as in Example 7, except that 0.310 g of L-lysine ethyl ester diisocyanate was used instead of 0.053 g of hexamethylene diisocyanate.

### Comparative Example 1

60 g of 3-hydroxypropionic acid was added to an oil bath and reacted at 90°C and 100 Torr for 2 hours. Then, 176 mg of p-toluenesulfonic acid (p-TSA) catalyst was added to the oil bath. The mixture was reacted under reduced pressure at 20 Torr for 2 hours and the polymerization reaction was carried out for 24 hours at less than 1 Torr to produce a polymer. After the reaction was completed, the reaction mixture was dissolved in chloroform at a ratio of 10g/50mL and extracted with 500 mL of methanol to obtain the polymer, which was then vacuum-dried for 12 hours.

Subsequently, 20 g of the polymer was added to an oil bath under a nitrogen atmosphere, and 0.12 ml of hexamethylene diisocyanate was added. The mixture was stirred and reacted at 140°C for 180 minutes to produce a 3-hydroxypropionate polymer.

### Comparative Example 2

A 3-hydroxypropionate polymer was produced in the same manner as in Comparative Example 1, except that 0.28 ml of hexamethylene diisocyanate was used instead of 0.12 ml of hexamethylene diisocyanate.

### Comparative Example 3

3475 g of 3-hydroxypropionic acid was added to an oil bath and reacted at 90°C and 100 Torr for 2 hours. Then, 14.7 g of p-toluenesulfonic acid (p-TSA) catalyst was added to the oil bath. The mixture was reacted under reduced pressure at 20 Torr for 2 hours, and the polymerization reaction was carried out for 24 hours at less than 1 Torr to produce a 3-hydroxypropionic acid polymer. After the reaction was completed, the reaction mixture was dissolved in chloroform at a ratio of 10g/50mL and extracted with 500 mL of methanol to obtain the polymer, which was then vacuum-dried for 12 hours to recover the 3-hydroxypropionic acid polymer.

### Comparative Example 4

3475 g of 3-hydroxypropionic acid and 34.8 g of 1,4-butanediol were added to an oil bath and reacted at 90°C and 100 Torr for 2 hours. Then, 14.7 g of p-toluenesulfonic acid (p-TSA) catalyst was added to the oil bath. The mixture was reacted under reduced pressure at 20 Torr for 2 hours, and the copolymerization reaction was carried out for 24 hours at less than 1 Torr to produce a copolymer. After the reaction was completed, the reaction mixture was dissolved in chloroform at a ratio of 10g/50mL and extracted with 500 mL of methanol to obtain the copolymer, which was then vacuum-dried for 12 hours to recover the copolymer.

### Comparative Example 5

Poly(3-hydroxypropionic acid) was produced in the same manner as in Example 1, except that 0.234 g of 1,3-phenylene bisoxazoline and 0.053 g of hexamethylene diisocyanate were not used.

### Comparative Example 6

Poly(3-hydroxypropionic acid) was produced in the same manner as in Example 7, except that 0.053 g of hexamethylene diisocyanate was not used.

### Experimental Example

The physical properties of the polymers prepared in the above examples and comparative examples were evaluated by the following methods, and the results are shown in Table 1 below.

### 1. Molecular Weight Measurement

The weight average molecular weight (Mw), number average molecular weight (Mn), peak molecular weight (Mp), and polydispersity index (PDI) of the (co)polymers of the examples and comparative examples were measured by gel permeation chromatography (GPC: gel permeation chromatography, Waters Alliance e2695).
- Solvent: chloroform (eluent)
- Flow rate: 1.0 ml/min
- Column temperature: 35 °C
- Standard: Polystyrene

### 2. Measurement of Tensile Strength, Modulus, and Elongation

The (co)polymers of the examples and comparative examples were used to prepare dog-bone film specimens according to ASTM D 882 standards at 90 °C using a hot press (Limotem QM900S), and the thickness was controlled as described in Table 1 below. Furthermore, the tensile strength, modulus, and elongation of the specimens were measured using a universal testing machine (Zwick).

**[Table 1]**

| | Mn | Mw | Mp | PDI | Tensile strengt h (yield point, MPa) | Tensile strength (breakin g point, MPa) | mod ulus (Gpa ) | elong ation (%) | thick ness (*µ*m) |
|---|---|---|---|---|---|---|---|---|---|
| example1 | 17,291 | 43,432 | 25,620 | 2.50 | 22 | - | 0.8 | 121 | 70 |
| example 2 | 21,819 | 62,350 | 33,476 | 2.90 | 16 | - | 0.9 | 118 | 70 |
| example 3 | 22,778 | 63,368 | 37,980 | 2.80 | 23 | - | 0.8 | 817 | 70 |
| example 4 | 38,871 | 144,784 | 56,535 | 3.72 | 30 | - | 1.1 | 910 | 70 |
| example 5 | 44,204 | 225,510 | 62,429 | 5.10 | 41 | - | 0.9 | 682 | 70 |
| example 6 | 26,264 | 74,531 | 39,822 | 2.84 | 18 | - | 1.1 | 647 | 70 |
| example 7 | 26,000 | 99,000 | - | 3.81 | 30 | 41 | 1.09 | 647 | 70 |
| example 8 | 30,000 | 90,000 | - | 3.00 | 27 | 38 | 0.97 | 678 | 70 |
| example 9 | 30,000 | 116,000 | - | 3.87 | 26 | 47 | 0.89 | 664 | 120 |
| example 10 | 30,000 | 107,000 | - | 3.57 | 27 | 38 | 0.96 | 622 | 120 |
| Comparative Example 1 | 14,524 | 27,781 | 26,063 | 1.91 | 27 | - | 1.0 | 1 | 70 |
| Comparative Example 2 | 20,160 | 34,328 | 32,417 | 1.70 | 14 | - | 0.9 | 3 | 70 |
| Comparative Example 3 | 13,691 | 24,041 | 23,577 | 1.76 | 14 | - | 1.0 | 4 | 70 |
| Comparative Example 4 | 9,983 | 19,646 | 16,706 | 1.97 | 10 | - | 0.8 | 7 | 70 |
| Comparative Example 5 | 15,000 | 24,000 | - | 1.60 | - | 14 | 0.98 | 60 | 60 |
| Comparative Example 6 | 24,000 | 62,000 | - | 2.58 | 28 | 11 | 1.03 | 70 | 70 |

Referring to Table 1 above, it was confirmed that Examples 1 to 10 have a higher molecular weight compared to Comparative Examples 1 to 6, and also exhibit superior tensile strength and elongation.

## Claims

1. A 3-hydroxypropionate (co)polymer composition comprising a 3-hydroxypropionate (co)polymer and an isocyanate compound.

2. The 3-hydroxypropionate (co)polymer composition of claim 1,
wherein the isocyanate compound is included 0.1 parts by weight or more and 10.0 parts by weight or less based on the 3-hydroxypropionate (co)polymer.

3. The 3-hydroxypropionate (co)polymer composition of claim 1,
wherein the 3-hydroxypropionate (co)polymer is a first 3-hydroxypropionate copolymer in which 3-hydroxypropionic acid and a diol are copolymerized.

4. The 3-hydroxypropionate (co)polymer composition of claim 3,
wherein both ends of the first 3-hydroxypropionate copolymer are substituted with hydroxyl groups.

5. The 3-hydroxypropionate (co)polymer composition of claim 1,
wherein the 3-hydroxypropionate (co)polymer is a second 3-hydroxypropionate copolymer in which a first 3-hydroxypropionate copolymer, in which 3-hydroxypropionic acid and a diol are copolymerized, has reacted with an isocyanate.

6. The 3-hydroxypropionate (co)polymer composition of claim 5,
wherein the second 3-hydroxypropionate copolymer comprises a repeating unit represented by Formula 2 below: 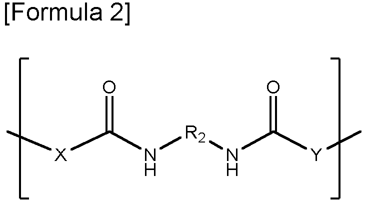
wherein in the Formula 2,
R₂ is a single bond; a substituted or unsubstituted alkylene having 1 to 60 carbon atoms; a substituted or unsubstituted alkenylene having 1 to 60 carbon atoms; a substituted or unsubstituted arylene having 6 to 60 carbon atoms; or a substituted or unsubstituted heteroarylene having 2 to 60 carbon atoms containing at least one heteroatom selected from the group consisting of N, O, S, and Si, and
X and Y are each independently represented by Formula 2-1 or Formula 2-2, respectively, but at least one is represented by Formula 2-1, 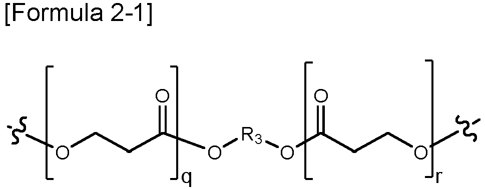
wherein in the Formula 2-1,
R₃ is a substituted or unsubstituted C₁₋₂₀ alkylene; a substituted or unsubstituted C₆₋₆₀ arylene; or substituted or unsubstituted C₂₋₆₀ heteroarylene containing at least one heteroatom selected from the group consisting of N, O, and S, and
q and r are each independently an integer from 5 to 1000, and 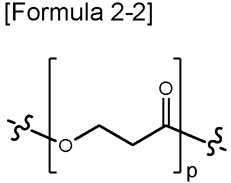
wherein in the Formula 2-2,
p is an integer from 5 to 1000.

7. The 3-hydroxypropionate (co)polymer composition of claim 1,
further comprising an oxazoline compound.

8. The 3-hydroxypropionate (co)polymer composition of claim 7,
wherein a weight ratio of the oxazoline compound and the isocyanate compound is from 1:0.0001 to 1:10.

9. The 3-hydroxypropionate (co)polymer composition of claim 7,
wherein the 3-hydroxypropionate (co)polymer comprises a repeating unit represented by Formula 6 below: 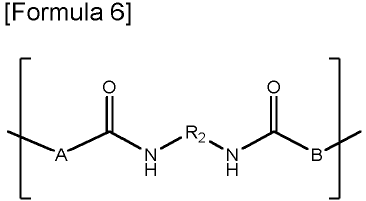
R₂ is a single bond; a substituted or unsubstituted alkylene having 1 to 60 carbon atoms; a substituted or unsubstituted alkenylene having 1 to 60 carbon atoms; a substituted or unsubstituted arylene having 6 to 60 carbon atoms; or a substituted or unsubstituted heteroarylene having 2 to 60 carbon atoms containing at least one heteroatom selected from the group consisting of N, O, S, and Si, and
A and B are each independently represented by Formula 6-1, Formula 6-2, or Formula 6-3 below, but at least one is represented by Formula 6-1 below, 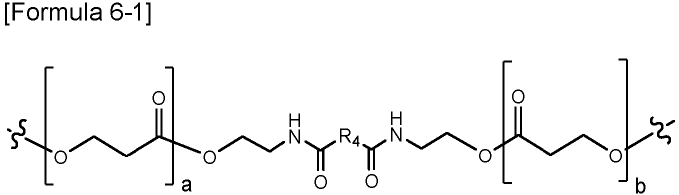
wherein in Formula 6-1,
R₄ is a single bond; a substituted or unsubstituted alkylene having 1 to 60 carbon atoms; a substituted or unsubstituted alkenylene having 1 to 60 carbon atoms; a substituted or unsubstituted arylene having 6 to 60 carbon atoms; or a substituted or unsubstituted heteroarylene having 2 to 60 carbon atoms containing at least one heteroatom selected from the group consisting of N, O, S, and Si, and
a and b are each independently an integer from 10 to 5,000; 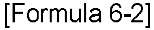 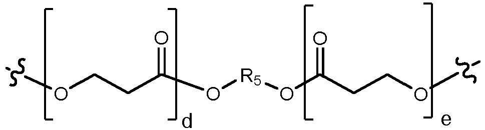
wherein in Formula 6-2,
R₅ is a substituted or unsubstituted C₁₋₂₀ alkylene; substituted or unsubstituted C₆₋₆₀ arylene; or substituted or unsubstituted C₂₋₆₀ heteroarylene containing one or more heteroatoms selected from the group consisting of N, O, and S, and
d and e are each independently an integer from 5 to 1000; and 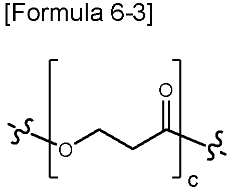
wherein in Formula 6-3,
c is an integer from 5 to 1000.

10. A poly(lactic acid-b-3-hydroxypropionic acid) block copolymer composition comprising a poly(lactic acid-b-3-hydroxypropionic acid) block copolymer and an isocyanate compound.

11. The poly(lactic acid-b-3-hydroxypropionic acid) block copolymer composition of claim 10,
wherein the poly(lactic acid-b-3-hydroxypropionic acid) block copolymer is a block copolymer in which lactide is ring-opening polymerized onto a second 3-hydroxypropionate copolymer formed by reacting a first 3-hydroxypropionate copolymer in which 3-hydroxypropionic acid and a diol are copolymerized, with an isocyanate.

12. The poly(lactic acid-b-3-hydroxypropionic acid) block copolymer composition of claim 10,
further comprising an oxazoline compound.

13. A method for producing a 3-hydroxypropionate (co)polymer, comprising:
producing a 3-hydroxypropionate (co)polymer by (co)polymerizing 3-hydroxypropionic acid in a reactor; and
adding an isocyanate compound to the reactor to react the isocyanate compound with the 3-hydroxypropionate (co)polymer.

14. The method for producing a 3-hydroxypropionate (co)polymer of claim 13,
wherein the (co)polymerization is carried out in the presence of a sulfonic acid catalyst.

15. The method for producing a 3-hydroxypropionate (co)polymer of claim 13,
wherein the reaction of the isocyanate compound with the 3-hydroxypropionate (co)polymer is carried out at a temperature of 80°C or more and 180°C or less for a time of 5 minutes or longer and 300 minutes or shorter.

16. The method for producing a 3-hydroxypropionate (co)polymer of claim 13,
wherein the producing of the 3-hydroxypropionate (co)polymer by (co)polymerizing 3-hydroxypropionic acid in the reactor is for producing a first 3-hydroxypropionate copolymer by copolymerizing the 3-hydroxypropionic acid and a diol.

17. The method for producing a 3-hydroxypropionate (co)polymer of claim 16,
wherein the first 3-hydroxypropionate copolymer comprises 0.05 parts by weight or more and 5.00 parts by weight or less of the diol per 100 parts by weight of the 3-hydroxypropionic acid.

18. The method for producing a 3-hydroxypropionate (co)polymer of claim 13,
further comprising adding an oxazoline compound to the reactor to react the oxazoline compound with the 3-hydroxypropionate (co)polymer.

19. The method for producing a 3-hydroxypropionate (co)polymer of claim 18,
wherein the oxazoline compound and the isocyanate compound are each independently added in an amount of 0.001 parts by weight or more and 5.000 parts by weight or less per 100 parts by weight of 3-hydroxypropionate (co)polymer.

20. The method for producing a 3-hydroxypropionate (co)polymer of claim 18,
wherein the isocyanate compound is added to the reactor after the oxazoline compound is added.

21. A method for producing a poly(lactic acid-b-3-hydroxypropionic acid) block copolymer, comprising:
producing a 3-hydroxypropionate (co)polymer by (co)polymerizing 3-hydroxypropionic acid in a reactor;
adding an isocyanate compound to the reactor to react with the 3-hydroxypropionate (co)polymer; and
producing a poly(lactic acid-b-3-hydroxypropionic acid) block copolymer by ring-opening polymerizing lactide monomer onto the 3-hydroxypropionate (co)polymer.

22. The method for producing a poly(lactic acid-b-3-hydroxypropionic acid) block copolymer of claim 21,
wherein the producing of the 3-hydroxypropionate (co)polymer by (co)polymerizing 3-hydroxypropionic acid in the reactor is a for producing a first 3-hydroxypropionate copolymer by copolymerizing the 3-hydroxypropionic acidate and a diol.

23. The method for producing a poly(lactic acid-b-3-hydroxypropionic acid) block copolymer of claim 21,
further comprising adding an oxazoline compound to the reactor to react with the 3-hydroxypropionate (co)polymer.
